# EUROPEAN PATENT APPLICATION

(11) **EP 4 696 921 A1**
(43) Date of publication of application: **18.02.2026**
(21) Application number: 25182558.4
(22) Date of filing: 13.06.2025
(51) Int. Cl.: F16L 55/165

(54) **INSTALLATION RECOVERY FOR A PIPE LINER**

(30) Priority: 14.08.2024 US 202418805169
(71) Applicant: INA Acquisition Corp., Wilmington, Delaware 19808 (US)
(72) Inventor: LARSON, Christopher, Castlerock 80104 (US); WELLE, Raymond L., Castlerock 80104 (US)
(74) Representative: Brand Murray Fuller LLP

(57) **Abstract**

A pipe liner installation recovery apparatus is configured for completing installation of a pipe liner such as an ultraviolet light cure-in-place-pipe liner installed within a host pipe. The pipe liner repair apparatus comprises a film feeder tank, a roller disposed within the tank, an outlet, and an inlet port. A roll of replacement film for repairing the pipe liner is installed on the roller. A fluid supply is connected to the inlet port, such that fluid from the fluid supply is directed into the film feeder tank. Under the pressure of the fluid directed into the film feeder tank, the replacement film contained on the roller, is driven through the film feeder tank, into the outlet, into the mouth of the pipe liner at a first end portion of the pipe liner, and through the pipe liner to a second end portion of the pipe liner.

## Description

### FIELD

The present disclosure relates generally to systems and methods for recovering an installation procedure for a cured-in-place pipe liner.

### BACKGROUND

Worn and leaky pipes, referred to as host pipes, can be renovated using cure-in-place-pipe (CIPP) liners that are cured to form a new pipe within the old host pipe without requiring substantial digging to remove and replace the pipes already buried in the ground. In general, the CIPP liner installation process occurs on-site at the location of the host pipe. The CIPP liner installation process includes positioning a resin-impregnated liner inside a host pipe and pressing the liner into contact with the interior of the host pipe. After the liner is properly positioned in the host pipe, the resin is cured so that the liner forms a new pipe inside the host pipe. In some instances, curing is accomplished by ultraviolet light. In those cases, the liner has an inner film that is substantially air impervious for use in inflating the liner during installation. The inner film needs to be transparent to ultraviolet light so that curing of the resin carried by the liner can be initiated.

### SUMMARY

**The** present disclosure provides an improved and more flexible framework for successfully installing cured-in-place pipe.

In one aspect, a method for repairing a pipe liner in a host pipe comprises detecting a defect in an inner film of the pipe liner lining the host pipe. A pipe liner repair apparatus is positioned proximate a mouth of the pipe liner. Air is directed into the pipe liner repair apparatus containing a replacement film. The replacement film is driven into the mouth of the pipe liner and through the pipe liner under the pressure of the air directed into the pipe liner repair apparatus. The replacement film is joined to the pipe liner.

In another aspect, a pipe liner repair apparatus for repairing a pipe liner comprises a film feeder tank including a roller disposed within the tank and an outlet. The roller includes a rotational axis and is configured to hold and let out an elongated roll of replacement film along a feed axis passing orthogonal to the rotational axis and passing through the outlet. The tank has a width perpendicular to the rotational axis of the roller and a length parallel to the axis of the roller. The length is at least three times greater than the width. An inlet port on the film feeder tank is configured to receive fluid therethrough and direct the fluid into the film feeder tank such that the fluid drives the replacement film through the outlet and into the pipe liner for repairing the pipe liner.

Other objects and features will be in part apparent and in part pointed out hereinafter.

### BRIEF DESCRIPTION OF THE DRAWINGS

FIG. 1 is a perspective of a system for recovering an installation of a liner into pipe, including a pipe liner installation recovery apparatus;
FIG. 2 is a front elevation of the pipe liner installation recovery apparatus of Fig. 1;
FIG. 3 is a rear elevation of the pipe liner installation recovery apparatus of FIG. 1;
**FIG.** 4 is a top plan view of the pipe liner installation recovery apparatus;
**FIG.** 5 is a perspective of the pipe liner installation recovery apparatus with parts removed to show internal construction;

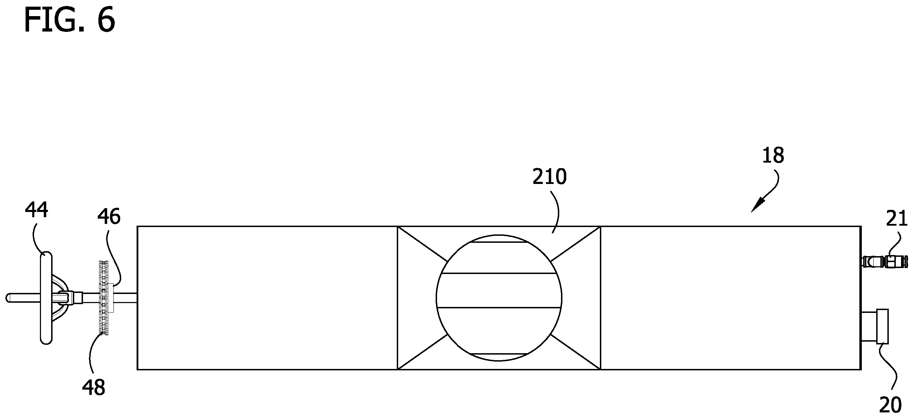

FIG. 6 is a section taken in the plane including line A-A of Fig. 2;
FIG. 7 is a bottom plan view of the pipe liner installation recovery apparatus;
FIG. 8 is a side elevation of a feeder tank of a pipe liner installation recovery apparatus of another embodiment;
**FIG.** 9 is a front elevation of the pipe liner installation recovery apparatus including the feeder tank of Fig. 8:
FIG. 10 is a flowchart illustrating a method for recovering a potentially defective installation of a pipe liner.

Corresponding reference characters indicate corresponding parts throughout the drawings.

### DETAILED DESCRIPTION

Cure-in-place-pipe (CIPP) liners are conventionally installed within defective host pipes to renovate the defective pipes. As with host pipes, CIPP liners are also prone to defects and damages that obstruct a proper functioning of the CIPP liners. Such damages and defects may occur at any time throughout the lifespan of a CIPP liner. For example, CIPP liners may incur defects and damages during manufacturing, shipping, handling, and use. Moreover, damages and defects can occur at different layers such as at an outer laminate layer and/or an inner film layer of a CIPP liner. Conventionally, defects and damages in a CIPP liner are addressed by ordering and installing an entirely new CIPP liner within the host pipe. Thus conventional processes for replacing defective CIPP liners are very time-consuming and costly. As will be described in further detail below, this disclosure pertains to systems and methods for recovering installation of a liner that may have a defective inner film layer. The apparatus and process have particular, but not exclusive application for liners having an inner film (or "foil") that is substantially transparent to ultraviolet (UV) light used for curing resin carried by the liner. Accordingly, systems and methods in accordance with the present disclosure provide a cost-effective, same-day detection and recovery solution for defective UV CIPP liners.

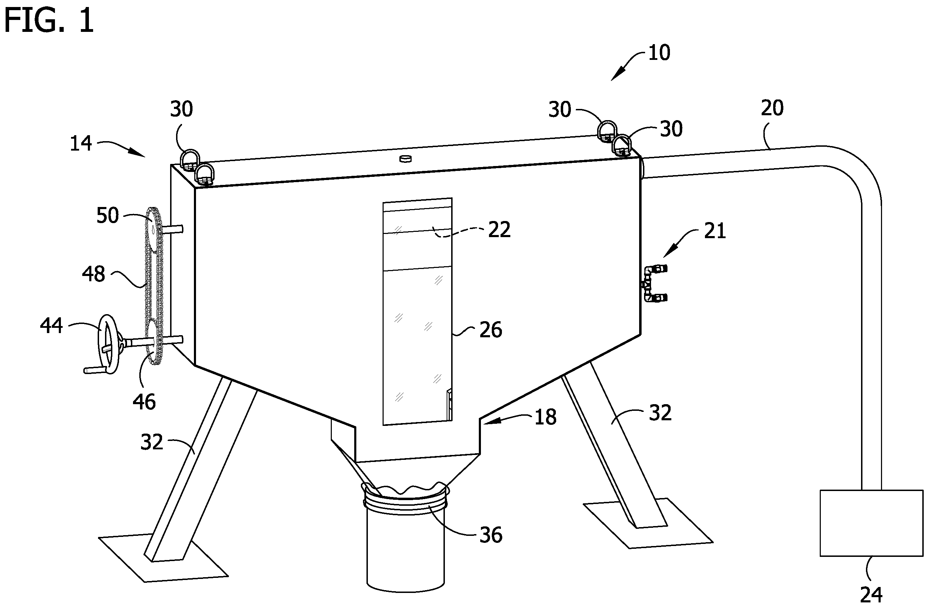

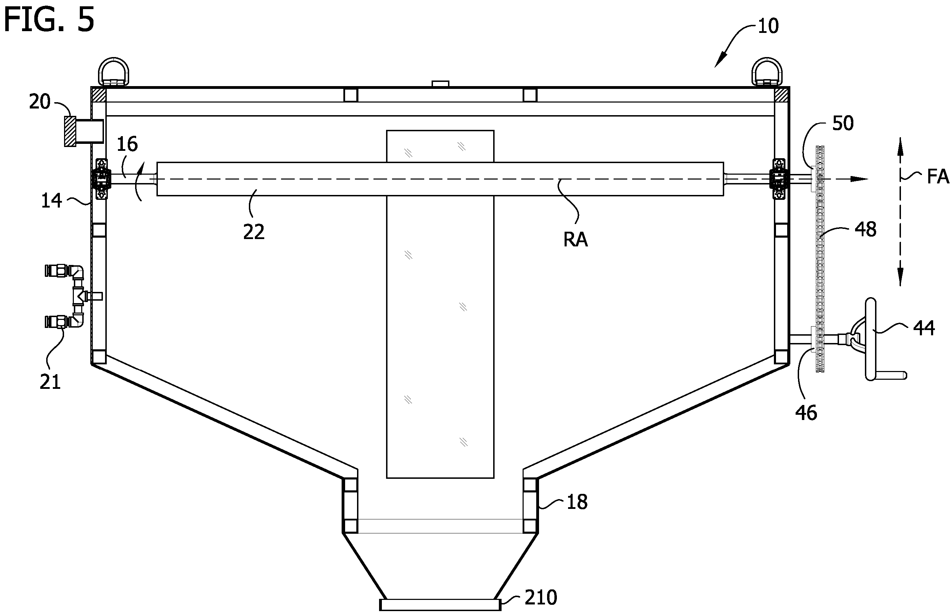

Referring now to Figs. 1 and 5, an exemplary embodiment of a pipe liner installation recovery apparatus is generally indicated at reference number 10. In general, the pipe liner installation recovery apparatus 10 is configured for achieving final installation of a liner already installed within a host pipe (not shown). The pipe liner installation recovery apparatus 10 broadly comprises a film feeder tank 14, a roller 16 disposed within the tank, an outlet 18, an inlet port 20, and an auxiliary port 21. The pipe liner installation recovery apparatus 10 is configured to accommodate a roll of replacement film 22 installed on the roller 16. During use, the outlet 18 of the pipe liner installation recovery apparatus 10 is positioned proximate a mouth of the pipe liner. A fluid supply 24 is connected to the inlet port 20, such that fluid from the fluid supply is directed into the film feeder tank 14. Accordingly, under the pressure of the fluid directed into the film feeder tank 14, the replacement film 22 contained on the roller 16, is driven through the film feeder tank, into the outlet 18, into the mouth of the pipe liner 12 at a first end portion 12A of the pipe liner, and through the pipe liner to a second end portion (not shown) of the pipe liner. Furthermore, the fluid inflates the replacement film 22 as it travels, such that the replacement film expands against the inner film layer of the pipe liner 12.

**The** film feeder tank 14 is shaped and arranged to accommodate the roll of replacement film 22 therein. The feeder tank 14 is built so that it can be substantially air tight, except at the outlet 18. Thus, any air pressure built up on the feeder tank 14 will try to escape through the outlet 18. The film 22, as described more fully hereinafter, is positioned over the outlet 18 so that the air pressure pushes the film off of the roller 16, out of the feeder tank 14 and into the host pipe. It will be understood that the film 22 is made at a factory in the form of a very long tube. The film 22 so formed, is flattened and rolled into a roll for use in the feeder tank 14.

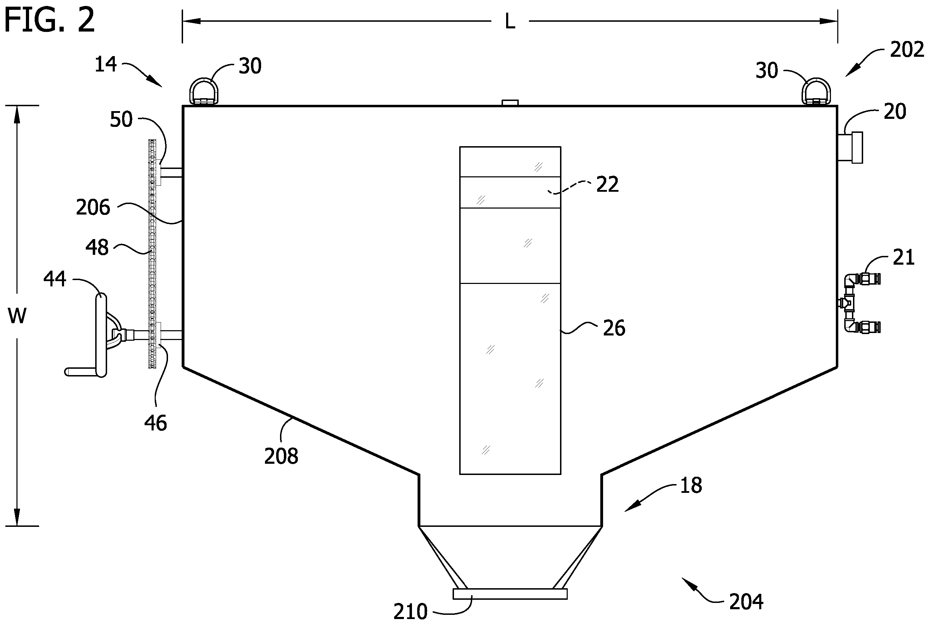

Referring now to FIG. 2, the film feeder tank 14 has a width Wand a length L. In general, the length L is greater than the width W. In some embodiments, the length L is at least three times greater than the width W and in other embodiments, the length L is at least five times greater than the width W. In the illustrated embodiment, the film feeder tank 14 comprises a rectangular body portion 206 and a tapered body portion 208. The roller 16 is disposed in the rectangular body portion 206. The tapered body portion 208 is positioned between the rectangular body portion 206 and the outlet 18. Moreover, the tapered body portion 208 tapers inward from the rectangular body portion 206 toward the outlet 18. Suitably, the shape of the film feeder tank 14 facilitates the replacement film 22 being driven from the roller 16 toward the outlet 18, and into the pipe liner 12 with minimal frictional interference. The tapered portion 208 gradually reduces the width of any film 22 that is wider than the outlet 18 to accomplish low frictional resistance and reduce the opportunity for tearing of the film.

In an exemplary embodiment, a viewing window 26 is provided on the film feeder tank 14. The viewing window 26 is generally configured to provide viewing access to an interior of the film feeder tank 14. This enables operators to view the interior components (e.g., the roller 16 and replacement film 22) while the pipe liner 12 is being rehabilitated for proper installation, thus allowing operators to quickly identify a malfunctioning of the interior components of the pipe liner installation recovery apparatus 10 and any undesired deformation of the film. Moreover, the viewing window 26 allows the operator to see when the end of the film 22 is about to come off of the roller 16. It will be understood that this occurs when just about half of the eversion process is complete. The process is halted and a rope 23 is fed through a bushing 31 in the film feeder tank 14 as schematically illustrated in Fig. 5. The rope 23 is tied to the end of the film 22 (not shown in Fig. 5). The feeder tank 14 is closed up again and the eversion process is resumed. The rope 23 can be held back to control the rate of eversion of the film 22 until the film is completely installed. The viewing window 26 is formed of a clear durable material that can withstand harsh jobsite environments. In the illustrated embodiment, the viewing window 26 comprises a rectangular window spanning from the rectangular body portion 206 to the tapered body portion 208. However, it will be apparent to a person of ordinary skill in the art that other arrangements of the viewing window 26 may be used without departing from the scope of the present disclosure.

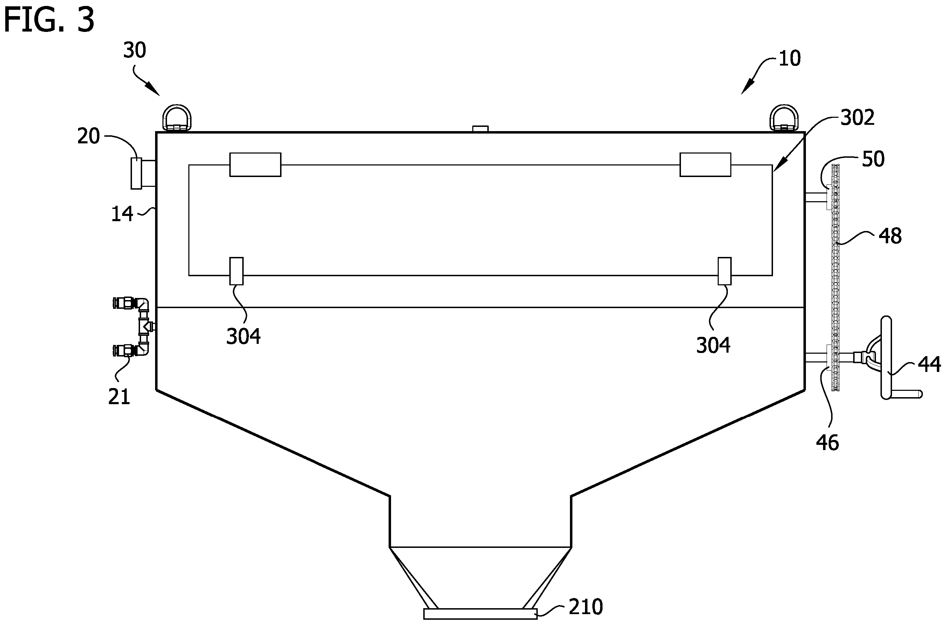

Referring now to FIG. 3, the film feeder tank 14 is shown comprising a door 302 installed thereon. The door 302 is configured to provide rapid access to an interior of the film feeder tank 14 when opened. This enables operators to access and perform maintenance on components contained within the film feeder tank 14 such as the roller 16 and replacement film 22. The door 302 is configured to form a fluid-tight seal with the film feeder tank 14 when closed (e.g., as by a gasket (not shown) on the door or feeder tanks), so that fluid directed into the film feeder tank does not escape through the door. The door 302 further comprises a suitable quick-locking system 304 that is configured to releasably lock the door and provide force to maintain the seal of the door with the feeder tank 14.

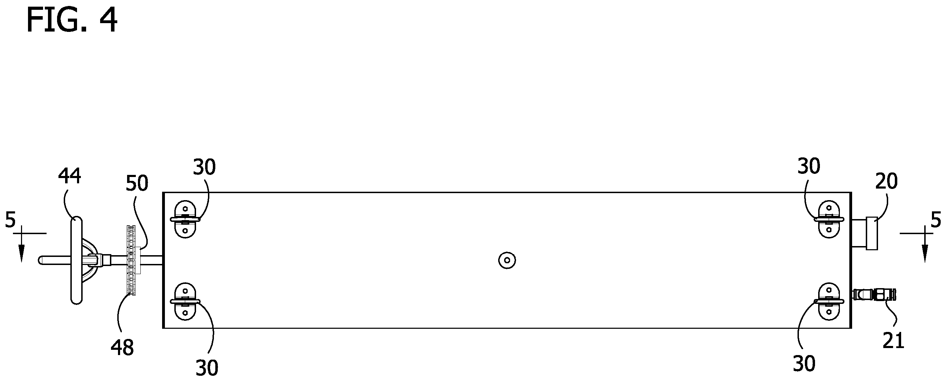

The pipe liner installation recovery apparatus 10 further comprises a support system connected to the film feeder tank 14. The support system is configured for at least one of facilitating transportation of the film feeder tank 14, and supporting a weight of the film feeder tank (including the roll of the replacement film 22) above ground. Particularly, the support system is configured for at least one of transporting and supporting the film feeder tank 14 proximate the mouth of the pipe liner 12 (e.g., above a manhole). In an exemplary embodiment, the support system comprises at least one of rings 30 and support legs 32. However, it is contemplated that other devices may be used to support and transport the film feeder tank 14, without departing from the scope of the present disclosure. In the illustrated embodiments of FIGS. 1 and 4, the support system is shown comprising rings 30 connected to the film feeder tank 14 at the top portion 202 of the pipe liner installation recovery apparatus 10. Accordingly, chains secured at one end to lifting machinery can be secured at their other end to the rings 30 for moving and supporting the film feeder tank 14. In addition to, or apart from the rings 30, support legs 32 may be installed on the film feeder tank 14. For portability, it is envisioned that the support legs 32 may be formed as foldable or retractable support legs. It is also envisioned that the support legs 32 may be removably attached to the film feeder tank 14.

Referring now to Fig. 5, an interior construction of the film feeder tank 14 is shown. As briefly described above, the roller 16 is disposed within the film feeder tank 14. The roller 16 comprises a rotational axis RA, and is configured to hold and let out the roll of replacement film 22 along a feed axis FA passing orthogonal to the rotational axis and passing through the outlet 18. The rotational axis RA is perpendicular to the width W of the film feeder tank 14, and parallel to the length L of the film feeder tank. In one embodiment, the pipe liner installation recovery apparatus 10 further comprises a brake system configured for retarding or stopping rotation of the roller 16. The brake system is configured such that an operator may retard rotation of the roller 16 from outside of the film feeder tank 14. In one example, the brake system comprises a hand wheel 44 positioned on the exterior of the film feeder tank 14 that is attached to a first sprocket 46 that meshes with an endless chain 48. The roller 16 includes an exterior portion at one end that extends through the feeder tank 14. A second sprocket 50 on the exterior portion is also meshed with the chain 48. The second sprocket 50 rotates conjointly with the roller 16. If desired, rotation of the second sprocket and thus, the roller 16 can be stopped or reversed by applying resistance to rotation through hand wheel 48. Rotation can also be reversed to pull back the film. Another form of braking (not shown) can be used to control rotation of the roller 16 and the speed and direction of the extension of the film 22 into the host pipe.

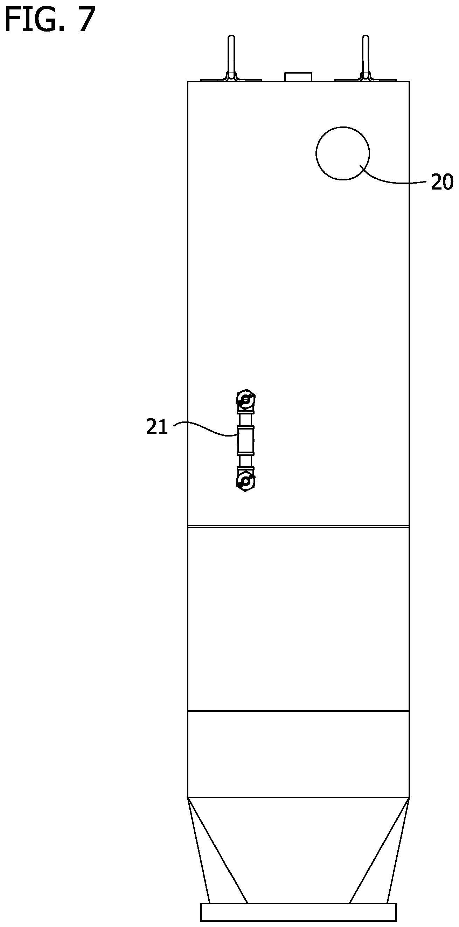

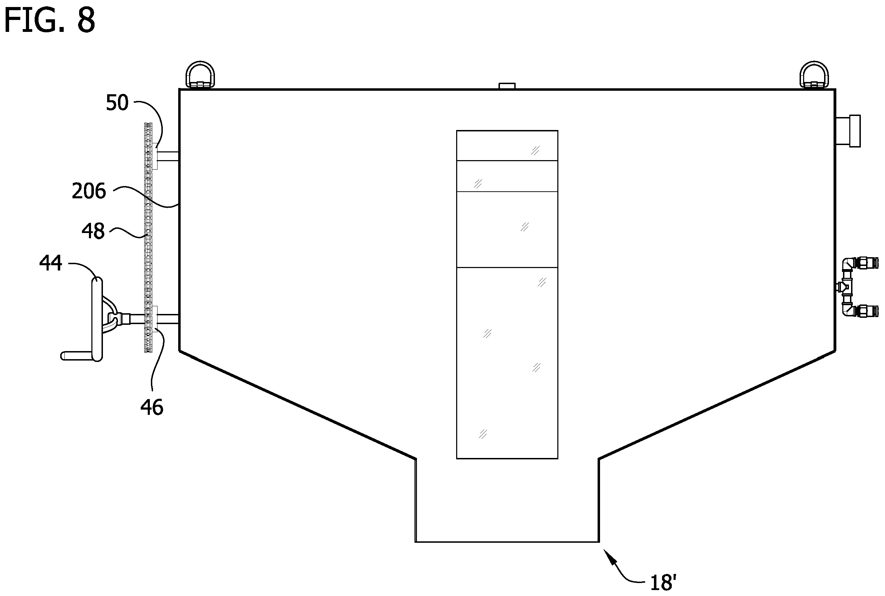

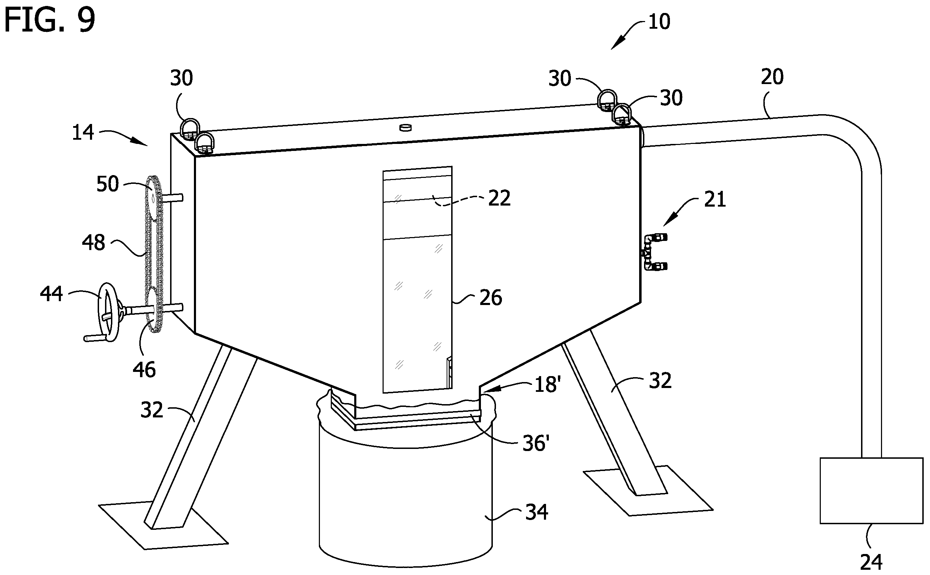

The outlet 18 (see, Fig. 7) is positioned at the bottom portion 204 of the pipe liner installation recovery apparatus 10 and configured for directing the replacement film 22 therethrough and into the pipe liner 12. The outlet or nozzle 18 defines an opening 52 that is circular in shape, although other shapes are possible within the scope of the present invention. In the illustrated embodiments, the outlet 18 forms a nozzle, or alternatively a nozzle may be connected to the outlet. The nozzle 18 comprises a round flange 210 that is configured for receiving a cuffed-back portion of the tubular film. The cuffed-back portion is received on an exterior surface of the flange 210 and is sealingly engaged with the exterior surface by a securing device or band 36. The flange 210 could also be used to attach other outlet members (not shown) having openings of smaller sizes for use with smaller diameter films for smaller diameter pipes. In another embodiment, shown in Figs. 8 and 9, the flange 210 is omitted and the film is attached directly to a nozzle 18' by a band 36'.

Referring now to FIG. 7, an exemplary embodiment of the inlet port 20 is shown. The inlet port 20 is configured for receiving fluid therethrough. For example, the inlet port 20 is configured for connection to the fluid supply 24 to receive fluid therefrom. In the illustrated embodiment, the inlet port 20 is positioned on a side of the film feeder tank 14. However, it is also contemplated that the inlet port 20 may be positioned on a top of the film feeder tank 14. Additionally, the pipe liner installation recovery apparatus 10 may be configured with more than one inlet port 20 to facilitate driving and inflating the replacement film 22. The auxiliary port 21 can be used to attach a sensor for giving a reading of the pressure inside the feeder tank 14. The auxiliary port 21 is illustrated with two fittings, but a greater or lesser of number of fittings could be provided.

The replacement film 22 is formed of reasonably robust material for replacing the inner film layer of the pipe liner 12. Particularly, the replacement film 22 is configured to withstand forces associated with eversion of the replacement film into the pipe liner 12. The replacement film 22 comprises a tube of material that is flattened and rolled onto a cardboard spindle (not shown). The spindle can be installed with the roll of film 22 onto the roller 16.

The fluid supply 24 is configured to removably attach to the inlet port 20 for directing fluid into the film feeder tank 14. The line attaching the fluid supply 24 the inlet 20 is relatively large. In one instance, a two-and-a-half-inch hose is used to connect the fluid supply 24 to the inlet 20. The fluid supply 24 is configured to supply fluid such as air or water free of contaminants that could affect a UV cure integrity of the replacement film 22. The fluid supply 24 may comprise a blower. The blower may move air filtered through a high grade (e.g., HEPA) filter so that no oil or debris enters the feeder tank 14. The film 22 could be torn or damaged by oil and debris blow against it. The blower 24 pressurizes the feeder tank to a relatively low maximum pressure. In one embodiment, the maximum pressure is seven PSI, in another embodiment 5 PSI, or less than 5 PSI. It has been found that film 22 of at least one useful configuration inflates at about 1 - 2 PSI. More pressure is required to evert the film 22. The blower 24 moves a relatively large amount of air. In some embodiment, the blower 24 moves air at about 500 cubic feet per minute. Moreover, the fluid supply 24 is configured to direct low-pressure, high-volume fluid into the film feeder tank 14 for driving and inflating the replacement film 22. In one example, the fluid supply 24 comprises a rotary vane compressor configured to force oil-free air through the inlet port 20 and into the feeder tank 14.

Referring back to FIG. 1, the pipe liner installation recovery apparatus 10 may further include a liner can 34. The liner can 34 is configured to receive the film 22 as it is everted out of the feeder tank 14. In one embodiment, restrictive nylon skirts (not shown) can be used to guide the film 22 from the feeder tank 14 into the liner can 34. In that regard, the liner is fitted around an end of the liner can 34 nearest the host pipe to that the liner is held open for receipt of the everting film 22.

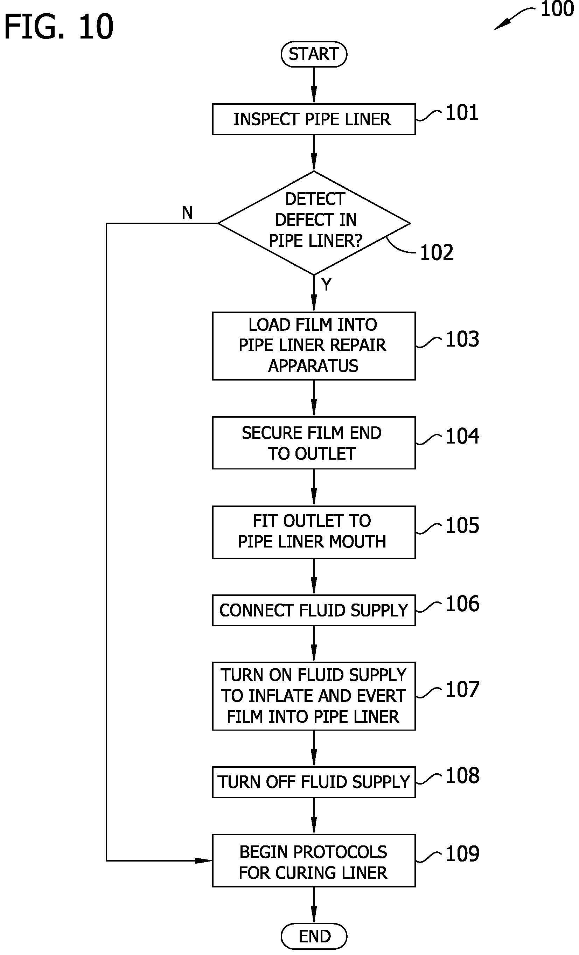

Referring now to FIG. 10, an exemplary method of recovering installation of a pipe liner 12 is generally indicated at reference number 100. The liner 12 is placed in the host pipe in a suitable manner such as by dragging the liner through the host pipe so that the liner extends from one access point to the next access point. The method 100 begins at step 101 wherein a crew member inspects the pipe line liner 12 to determine whether the pipe liner has a defect (step 102). Particularly, the crew member inspects the pipe liner 12 to determine whether the inner film layer of the pipe liner has been compromised. Some indications that the inner film layer of the pipe liner 12 is compromised include, but are not limited to laminate discoloration, odor and air leakage. For example, if the pipe liner 12 appears white or some other irregular color, this is an indication of a compromised or defective inner film of the pipe liner. Moreover, if the inner film layer of the pipe liner 12 is compromised, air will move between the layers and back to the mouth of the pipe liner. The purpose of the inner film layer is to hold air pressure to allow the liner to be inflated within the host pipe. If there is a leak in inner film layer, air manifests itself through a slit cut by a crew member at the pipe liner's termination points, thereby resulting in air and a styrene odor. In yet another example, if the pipe liner 12 is having trouble maintaining air pressure, this is an indication of a defective pipe liner. If a defect is detected, the method proceeds to rehabilitation processes described herein for recovering a complete and satisfactory installation of the defective pipe liner 12.

Once it has been determined that a defect in the existing interior film of the liner exists, the pipe liner installation recovery apparatus 10 is prepared for use in recovering the installation of the defective pipe liner 12. Air pressure is removed from the liner and it collapses within the host pipe. At step 103, the replacement film 22 is loaded into the film feeder tank 14 onto the roller 16. For example, a crew member opens the door 302 and removes the shaft of the roller 16. The roller shaft is inserted through a tubular (cardboard) holder onto which the film 22 was wound at the factory. The crew member then loads the roll of replacement film 22 into the feeder tank 14 by reinstalling the shaft of the roller 16 in the feeder tank. An open leading end portion of the collapsed, tubular film 22 is fed out from the roller 16 and through the outlet 18 of the feeder tank 14. The open leading end portion of the tubular film is grasped by the crew member and turned back onto itself, forming a cuff at the leading end of the film. At step 104, the cuff is positioned over the outwardly facing surface of the flange 210 and secured to the flange using the securing device 36 (e.g., a band with an adjustable buckle for tightening). Before or after securing the film portion to the flange 210, the crew member shuts and locks the door 302 to seal the replacement film 22 in the film feeder tank 14.

At step 105, the outlet 18 is positioned proximate the pipe liner 12. One or more liner cans 34 are used to guide the tubular film 22 into the liner 12. More specifically, the liner 12 can be fitted around an end of the liner can 34 farthest from the feeder tank 34, and secured to the liner can. Thus, the liner can 34 holds open an end of the liner. The tubular film 22 can be stuffed into the liner can 34 from the opposite end to a location near the mouth of the liner now being held open by the liner can. Moving the film 22 into the liner 12 is now ready to begin.

At step 106, the fluid supply 24 is connected to the feeder tank 14 via the inlet port 20. At step 107 the fluid supply is turned on to inflate and evert the replacement film 22 into the pipe liner 12. Air pressure from the feeder tank 14 pushes against the cuff formed in the leading end of the tubular film 22. At a relatively low pressure (e.g., less than 7 PSI, less than 5 PSI, etc.), the force against the leading end of the film 22 cause the film to evert and also pulls more film off of the roller 16. Turning the tubular film 22 inside out under air pressure causes the replacement film to move lengthwise out of the liner can 34 and into the mouth of the pipe liner 12 held open by the liner can. The film 22 moves through the pipe liner and host pipe under the pressure of the fluid directed into the pipe liner installation recovery apparatus. As the replacement film 22 turns inside out and travels down the length of the pipe liner 12, the fluid inflates the replacement film 22 causing the liner to expand in the host pipe. In one embodiment, step 107 comprises activating a rotary vane compressor 24 to blow air into the pipe liner installation recovery apparatus 10. During the eversion process, the sealed end of the film 22 comes off of the roll. The sealed end of the film is secured to the hold back rope 23, which is then threaded through the bushing 31 of the film feeder tank 14. From here, the eversion process is continued using the rope 23 to provide control on the rate of eversion. Once eversion of the replacement film 22 into the pipe liner 12 is complete, the fluid supply 24 is powered off (step 108).

At step 109, resumption of installation and curing of the liner can now be initiated. The liner can 34 is removed from the liner 12. The film 22 is cut off to approximately the length of the liner. The liner can 34 is then re-purposed to hold open the end of the liner 12 and newly installed film. A sealing connection is made between the tubular film 22 and the liner can 34. As is known, the liner can 34 is constructed to operate as an air lock to permit re-inflation of the film 22 and liner 12 by applying air pressure from the blower 24. The liner can 24 allows entry of a curing activation device (e.g., a UV curing activation device) into the tubular film 22 and liner while holding pressure to keep the liner 12 pressed against the interior of the host pipe. Once curing is complete, the liner retains itself in a tubular position, thereby renewing the functionality of the host pipe. The film 22, as well as the old inner film layer, are removed in ways known to those of ordinary skill in the art to complete repair of the host pipe.

It is understood that alternative embodiments of the invention may include some of the above-described features but not others. The above variations should be understood as illustrative examples and not as an exhaustive list. Additionally, it is understood that alternative embodiments of the invention may use different parts to accomplish the same functions described above.

Having described the invention in detail, it will be apparent that modifications and variations are possible without departing from the scope of the invention defined in the appended claims.

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above products without departing from the scope of the invention, it is intended that all matter contained in the above description and shown in the accompanying drawings shall be interpreted as illustrative and not in a limiting sense.

## Claims

1. A method for installing a pipe liner in a host pipe, the method comprising:
detecting a defect in an inner film of the pipe liner;
positioning a pipe liner installation recovery apparatus proximate a mouth of the pipe liner extending through a host pipe;
directing air into the pipe liner installation recovery apparatus containing a replacement film;
driving the replacement film into the mouth of the pipe liner and through the pipe liner under the pressure of the air directed into the pipe liner installation recovery apparatus; and
inflating the replacement film and the pipe liner against an interior surface of the host pipe; and
curing the liner in the host pipe.

2. The method of claim 1, wherein detecting a defect in the inner film of the pipe liner comprises determining that the inner film has been compromised and comprises at least one of detecting discoloration of the inner film and detecting air leakage from the pipe liner.

3. The method of either one of claims 1 and 2, further comprising operatively connecting the pipe liner installation recovery apparatus to the pipe liner.

4. The method of any one of claims 1-3, wherein positioning the pipe liner installation recovery apparatus proximate the mouth of the pipe liner comprises inserting a hold-open into the mouth of the pipe liner and operatively connecting a nozzle of the pipe liner installation recovery apparatus to the hold-open.

5. The method of any one of claims 1-4, further comprising securing a first end portion of the replacement film onto a nozzle of the pipe liner installation recovery apparatus, and wherein driving replacement film into the mouth of the pipe liner and through the pipe liner comprises everting the replacement film into the mouth of the pipe liner and through the pipe liner.

6. The method of any one of claims 1-5, wherein directing air into the pipe liner installation recovery apparatus and driving the replacement film into the pipe liner comprises inflating the replacement film to expand against an inner film of the pipe liner.

7. The method of any one of claims 1-6, further comprising removing the replacement film from the pipe liner.

8. The method of any one of claims 1-7, further comprising loading a roll of the replacement film onto a roller of the pipe liner installation recovery apparatus.

9. The method of any one of claims 1-8, wherein directing air into the pipe liner installation recovery apparatus comprises bringing air pressure in the pipe liner installation recovery apparatus to no more than about 5 PSI.

10. The method of any one of claims 1-9 wherein directing air into the pipe liner installation recovery apparatus comprises delivering air into the pipe liner installation recovery apparatus at least at about 400 cubic feet per minute.

11. The method of any one of claims 1-10, wherein the roll of film is transparent to UV radiation.

12. A pipe liner installation recovery apparatus for completing installation of a pipe liner, the pipe liner installation recovery apparatus comprising:
a film feeder tank including a roller disposed within the tank and an outlet, the roller including a rotational axis and being configured to hold and let out replacement film from an elongated roll of replacement film along a feed axis passing orthogonal to the rotational axis and passing through the outlet, the tank having a width perpendicular to the rotational axis of the roller and a length parallel to the axis of the roller, the length being greater than the width;
an inlet port on the film feeder tank configured to receive fluid therethrough and direct the fluid into the film feeder tank such that the fluid drives the replacement film through the outlet and into the pipe liner.

13. The pipe liner installation recovery apparatus of claim 12, wherein the film feeder tank comprises a rectangular body portion and a tapered body portion, the tapered body portion positioned between the rectangular body portion and the outlet, the roller being disposed in the rectangular body portion, the tapered body portion tapering from the rectangular body portion toward the outlet.

14. The pipe liner installation recovery apparatus of either claim 12 or claim 13, further comprising a flange located proximate the outlet and configured for connecting the film feeder tank to an end of the replacement film.

15. The pipe liner installation recovery apparatus of any one of claims 12-14, wherein the film feeder tank further comprises a viewing window positioned to provide viewing access to an interior of the film feeder tank, and a door to provide access to an interior of the film feeder tank.
